# EUROPEAN PATENT APPLICATION

(11) **EP 0 639 019 A1**
(43) Date of publication of application: **15.02.1995**
(21) Application number: 94500123.8
(22) Date of filing: 13.07.1994
(51) Int. Cl.: H04M 11/00, H04L 12/28

(54) **Telephone interface circuit for an appliance data bus**

(30) Priority: 15.07.1993 ES 9301701
(71) Applicant: FAGOR, S.COOP. LTDA., E-20500 Mondragon (Guipuzcoa) (ES)
(72) Inventor: Garate Orbe, Alfonso, E-48340 Amorebieta (Vizcaya) (ES)

(57) **Abstract**

The interface circuit [1] gives the user two-way communication with electric appliances [APP1, APP2,APPn] connected to a data bus [S,N] for integrally managing a household kitchen via the telephone line.

Around a main controller [2], it comprises signal detector [6] that is inter-connected with telephone tone detector/ generator [3], and voice and tone signals recorder/ reproducer (4), in addition to having variable user message memories [5] belonging to the recorder (4), and various external memories holding fixed response data addressed by the controller using a decoding process, and a FSK modem [11] for coupling said data bus [S,N] to interface circuit [1].

## Description

### TECHNICAL FIELD OF THE INVENTION

The invention relates to a interface circuit transmitting electrical communications received from the telephone line in the form of audio signals or multi-frequency tone signals, to a household data bus for controlling electrical appliances, data processed and converted into suitable signals so that the circuit interconnects both paths, the telephone line and the appliance data bus by two way addressing of signals and messages.

### BACKGROUND ART

Remote or local household appliance control systems are known which comprise an electric circuit controller telephone interface circuit, or appliance management terminals which, in addition to a telephone tone detector/generator, include an on-line audio player/recorder are known, those described in Patent Specifications WO 89/11194, US 4,885,766, GB 2 230 163, US 5,038,372 T-D, and CA 2,022,293.

These systems or devices transmit coded telephone signals directly from the controller to a range of individual switches related to the electric household appliances or to other telephone receivers for starting and stopping them, and such transmission takes place through a range of multiplexer paths leading from the controller. The audio recorder-player which embodies these systems fulfils merely the function of an audio interface to record the transmitter telephone audio messages and subsequently play them back and transmit controller responses into the telephone line to confirm that correct codes have been received, but it does not take part in managing each appliance.

The device provided with the interface circuit for the systems in the above-mentioned patents is not itself an household appliance which performs integral control tasks with other appliances connected to the household data bus, and instead merely acts as an interface with the particular paths or switches for each appliance.

In the procedure pursued for connection and communication between the remote telephone and the appliances, the above mentioned systems receive from the appliance to which the command is addressed, a reply to denote the on/off switching condition of the relevant breaker, or alternatively a power consumption reading if a power meter has been connected to such breaker, but no other kind of situations such as status of carrying out an appliance program, deficiencies and operating faults in the appliance, or message data relating to the coordination among several inter-related appliances, because those appliances possess no integral smart system, nor are they connected to a common data bus.

GB 2 229 022 describes a remote infrared (IR) handset or control for coupling to a telephone for communicating with household appliances by data bus or a.c. power line using an interface circuit that comprises an FSK modem.

### DISCLOSURE OF THE INVENTION

The interface circuit provided by the present invention comprises a telephone gateway which establishes two way communication between the telephone line and a data bus for managing electric appliances inside a household and allows the user to transmit commands from a remote telephone or the local telephone and receive responses from the controller, particularly for appliances integrated into a fully fitted kitchen like that described in Patent Application ES 9202598 filed by the same Applicant, and can be applied to any household equipment provided with a frequency modulated data bus via a.c. mains wiring, household appliances which are fitted with a micro-controller and internal smart system with sensors and actuators to communicate individually with the telephone line, with each appliance being able to discern whether the command from the common data bus is intended for it, and to switch off its communication tasks during a waiting period until the message is completed.

An interface circuit is connected to the telephone line by means of a telephone coupling circuit and a ring detector which off-hooks the interface by an external interrupt to the controller enabling it to receive messages in the form of voice signals or coded tone signals. A signal detector sends an external interrupt signal to the controller which discerns between tone signals and voice signals with the aid of a tone detector which interprets and decodes them so that the controller can execute the command they contain. If the message received is a voice signal, a recorder/command reproducer and voice player will convert it into a digital signal and record it.

Where messages are received in the form of tone signals, each dual tone multifrequency (DTMF) has been generated by one or another of the push buttons depressed on the user's telephone and represents a coded command for electric household appliance management. Each DTMF is converted into a coded digit by the DTMF detector/generator which stores them in a register from where each is read by the interface circuit controller through the integral data bus, each digit being a command that has a particular meaning according to the order in which it is received, where the first one relates to the electric household appliance for which it is intended, among these being included along with the others the apparatus that contains the telephone interface circuit, and the subsequent ones, from 0 to 9, each relate to a task execution command either for operation, for programming, or for making a check on, for example, the power consumption, the status of the appliance in its program execution, or for operating faults and failures.

The controller has a range of external memories where it stores fixed messages belonging to the interface circuit such as a valid reception confirmation message, data relating to each household appliance like that already mentioned, inter-path connection and communication process execution program data, or memories with which the controller communicates via their data and direction buses. A controller associated EEPROM type memory holds modifiable user data, such as the alarm telephone number to be used by the interface to alert the user.

The recorder/reproducer, which is also an essential part of the interface circuit, not only performs the complementary function of a telephone audio answering device in the same way as known devices do, but also that of recording control and alarm data, in the local mode from its own keypad, and in the remote mode from a telephone within or outside the household, the tones being converted into data by the DTMF detector/generator, and the functions of subsequently reproducing these data for a deferred control towards the relevant appliance or the remote alarm telephone specified by the user.

To make these functions perform, the user addresses the interface circuit by pressing the particular key that belongs to it, because it has been assigned a code numeral in just the same way as they are assigned to any other appliance being managed through the household data bus.

An essential feature of the recorder/reproducer is that it operates in conjunction with the DTMF detector/generator and the controller, for which purpose it has a plurality of memories for variable user data and here are recorded audio messages received from the telephone line for subsequent play back to the user, while in the other direction, it voice synthesizes messages which the controller has to send to the user in connection with different kinds of appliance data such as alarms, or identification or confirmation of task accomplished, these messages being fixed automatic response messages held in the controller memories. Moreover, it operates in conjunction with the DTMF detector/generator to give the user audio confirmation that commands and valid access code are received.

Since the interface circuit is an appliance that is also connected to the household appliance data bus, the user in his remote location can depress its particular telephone numeric key and then by means of code numerals, send commands for deferred execution or for monitoring household appliance operations, or commands for executing particular recorder/reproducer tasks in conjunction with the controller, such as to define the telephone number where the alarm message will be sent, and enter or delete messages, which likewise are differentiated by various codes.

The household appliance data bus to which appliances are directly connected carries FSK modulated signals superimposed to the power a.c. voltage, and for this reason, once the tones have been converted into coded digits by the MFDT detector, the controller structures the message into a series of elementary strings or binary data blocks, and transmits them to a modem circuit which converts them into FSK modulated signals to be carried by the appliance data bus. In the opposite direction, the modem demodulates the FSK signals coming from the appliance data bus, and transmits them to the controller.

### DESCRIPTION OF THE DRAWINGS

FIG. 1 is a general circuit block diagram of an embodiment of the interface circuit according to the invention.

FIG. 2 is a circuit block diagram of the interface circuit control unit.

FIG. 3 is a circuit block diagram of the tone signal detector/generator.

FIG. 4 is a circuit block diagram of the audio and command recorder/reproducer.

FIG. 6 is a flow chart depicting the basic steps of the communication process through the interface circuit.

### PREFERRED EMBODIMENT

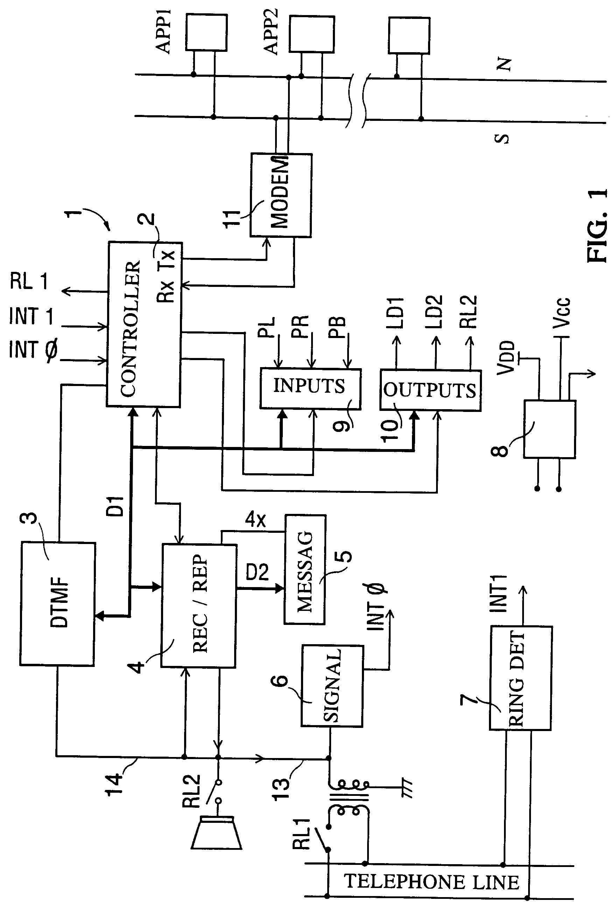

With reference to Fig. 1, the interface circuit 1 object of the invention establishes the connection between the electric household appliance data bus S,N with the telephone line, enabling DTMF or voice signals generated by a remote or local telephone to be transmitted from the user to the appliances APP1, APP2, APPn, or else in the opposite direction where appliance data transmitted through modem 11 by the bus S,N are received by the user by means of the controller 2, and the recorder/ reproducer 4 or the interface circuit tone generator 3.

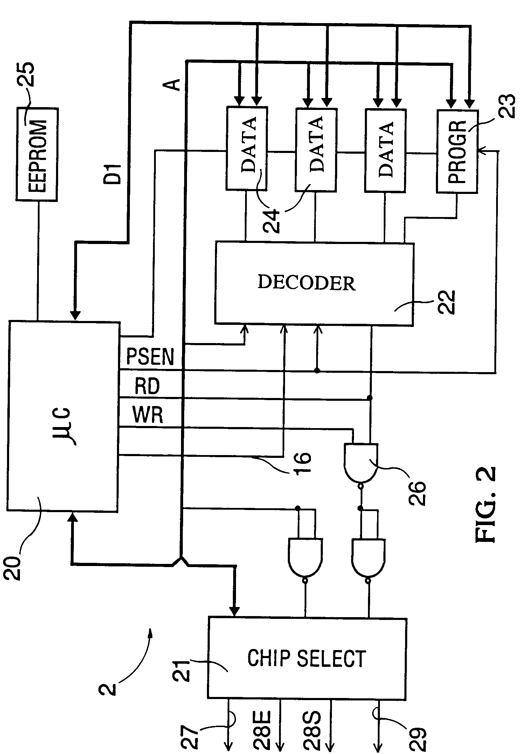

The preferred embodiment comprises, as is shown in Figures 1 to 4, the following blocks:
- the controller 2, which establishes the communication process between the telephone line and the appliance data bus S,N, that has on the one side connected all the telephone signal processing blocks, and on the other, the modem 11 for coupling it to said bus;
- a known ring detector 7, constructed by means of a rectifier and an opto-coupler which, in the case of positive detection, obtains an INT 1 external interrupt signal from the controller, and which, after several INT 1 signals, energizes a relay RL1, so that interface circuit 1 goes on-hook, and completes the connection stage;
- a known telephone audio or tone signal detector 6, comprising an amplifier, an integrating filter and a comparator, which is coupled to the telephone line by a known coupling circuit having a transformer and a varistor, through the first relay RL1 contact to initiate the communication stage, where, in the event that a telephone signal is present, the detector gets an external interrupt INT signal (which is active at "0" state) of the controller, and this keeps the communication path connected, or opens the telephone line in the absence of said INTO signal after a preset time;
- the DTMF detector/generator 3 connected on the one side to the controller via the D1 data bus, and on the other to signal detector 6 and recorder/reproducer 4 by a two-way signal lead 13,14;
- the recorder/player 4 connected on the one side to controller 2 by data bus D1, an enable lead and a select signal lead 29, and on the other to said two-way signal lead 13,14 for message transmission in both directions, and to a loudspeaker via contact RL2 on a second relay RL2 that is energized from a push button PL. The recorder/reproducer have two data buses D1, D2, of which the bus D1 is toward the controller 2, and the bus D2 toward several external memories 5;
- an input ports block 9 associated with the controller 2, and constructed in a known manner with a latch such as the 74HCT573, arranged with three push buttons PL,PR,PB, the button PL being used to switch the communication to the local telephone, the button PR to switch on the reproducing part, and the button PB to delete the recording from the recorder/reproducer;
- an output ports block 10 associated with the controller 2, and constructed in a known manner with a latch of the same kind as described above, having two ports LD1,LD2 for direct LED energizing, and a port toward the second relay RL2 through a NAND gate and a transistor;
- a modem circuit 11 to connect controller 2 to appliance data bus S,N modulating the data at FSK frequency;
- a known supply circuit 8 supplying Vdd to all the telephone interface circuit, and biasing components with the usual Vcc, that includes moreover a battery;
- The controller 2 is diagrammatically shown in Fig. 2, and comprises a micro-controller 20 such as the 80C31BH micro-controller, which has a data bus D1 and an address bus A to an arrangement of external memories 23,24 of two kinds, message data memories 24, of which for instance there might be three type 27512 memories, and programming data memories 23, for instance one type 27C256 memory for appliance programming, a type 74HCT138 chip selector 21, and a type 74HCT138 decoder 22. Memories 23, 24 are addressed by means of a type 74HCT138 decoder 22 in conjunction with the chip selector 21 using a logical circuit 26 made from three NAND gates, and a coding process for five address signals, of which three enable the three message data memories 24, the RD is for reading, and the PSEN for programming memory 23 access. Decoder 22 receives previously a signal 16 from the micro-controller 20, which defines the memory to be addressed.

The controller 2 is moreover provided with a type 93C06 EEPROM, which stores user modifiable data, such as the alarm alert telephone number.

The chip selector 21 output ports 27,28E,28S,29 go respectively to the DTMF detector/generator 3, the inputs block 9, the outputs block 10, and the recorder/reproducer 4.

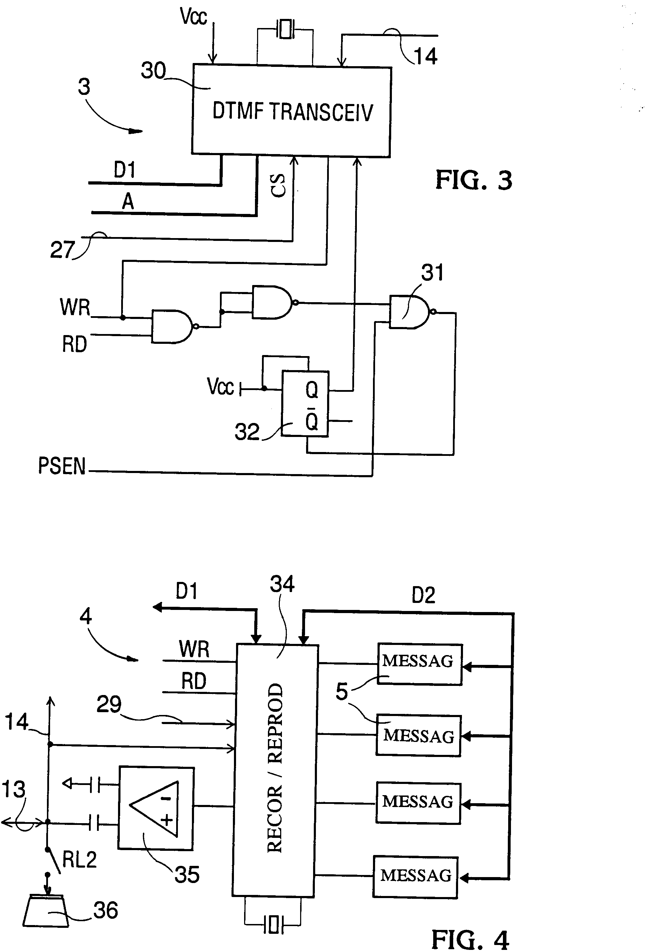

- The tone detector/generator 3, as shown diagrammatically in Fig. 3, comprises a monochip DTMF transceiver 30 such as the MITEL MT 8880, a logical circuit 31 including a flip-flop 32 placed between the address inputs and controller access inputs. The DTMF transceiver 30 basically performs the functions of D/A conversion, counting timed tone bursts, call progress filtering, DTMF generation to synthesize tone bursts and pauses, internal status of data and control recording, valid dual tone detection, incoming tone decoding according to a known equivalency table (pair of frequency values = four bit byte, and validation of decoded signal duration before recording.

Communication with the controller 2 is established via the four bit data bus D1, and the address bus A, after checking for a valid incoming DTMF.

The recorder/reproducer 4, as is diagrammatically illustrated in Fig. 4, comprises a solid state recorder 34 such as the MSM6388 by OKI, a set of external message memories 5, of which for instance there might be four type MSM6389 memories, an audio output signal amplifier 35, and a loudspeaker 36. The MSM6388 uses adaptive differential pulse modulation (ADPCM) technology, and also works as a player for telephone line audio messages stored in integral memories 5, and as a player for response messages stored by controller 2 through its voice synthesizer and a loudspeaker 36;

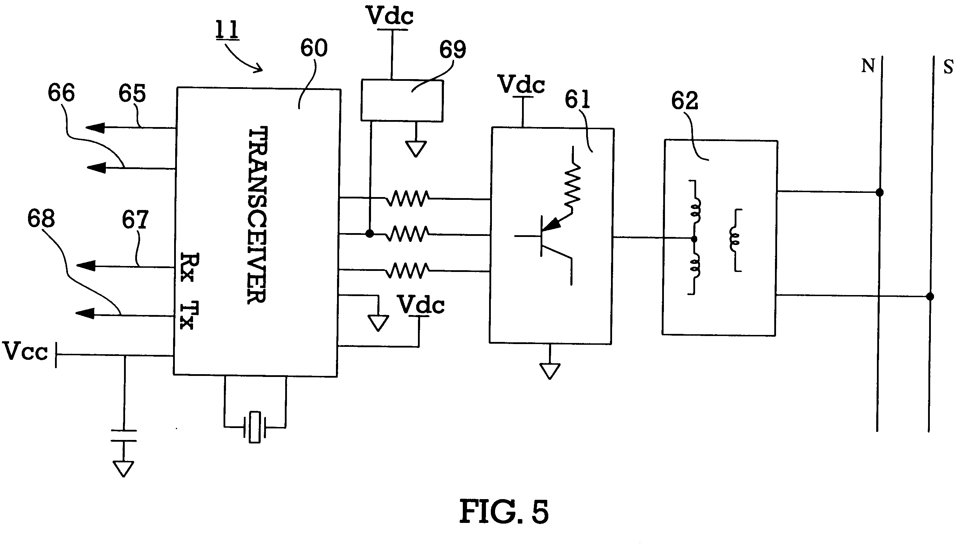

The FSK modem circuit 11, as diagrammatically illustrated in Fig. 5, is preferably embodied with a current carriers transceiver 60, such as the THOMSON ST7537, to which is incorporated a bus S,N signal conditioner circuit 61 which uses a d. c. bias circuit 69, through a coupling transformer 62. The transceiver 60 receives control signals 65 and 66 and data signals 67 and 68 from the controller 2.

Whenever the user at the remote telephone depresses the push buttons, in the command signal transmission procedure that is carried out, he generates a dual tone every one in correspondence to the decimal digit of each key according to a sequence that is defined by the command to be transmitted. By means of external interrupt INT0, signal detector 6 puts controller 2 in communication with the rest of the circuit blocks and stores the coded digits. Recorder 4 stores the command if it is for deferred executing, or else, if it is for immediate execution, the DTMF generator 3 decodes each dual tone in a four bit byte, and sends them via data bus D1 to the controller which processes the command in accordance with a standard protocol, structuring it into an eleven eight bit byte data stream for transmission through the internal UART Tx to modem 11, from they go out in the form of frequency modulated data according to the FSK technique for conveyance along the appliance data bus S,N carried by the a.c. mains voltage to the appliances.

In one message coding example which has been established in this preferred embodiment, the binary digit belonging to the first depressed key corresponds to the target appliance, and the subsequent ones to an executing command, being the second digit the type of task to be executed, which is conditioned by said first digit:
- the 1st digit: 0 is for the interface circuit, and 1 to 9 are for the various electric household appliances;
- the 2nd. digit when the 1st is 0 (targeting interface circuit): 2 is deferred execution, 3 monitoring, 5 record an alarm number, 8 reproduce messages, 9 delete messages, the 3rd and subsequent digits express a telephone number when said 2nd digit is 5;
   the 2nd digit when said 1st digit is 1 to 9 (targeting one of the various electric household appliances): 0 off, 1 on,
   the 3rd and subsequent digits express in pairs the time in hours and minutes when command execution is to commence,
- the 3rd digit when the 1st is 0 and the 2nd is 2: one of the various appliances from 1 to 9,
   the 3rd and subsequent digits express a telephone number when said 1st digit is 0 and the 2nd is 5,
   the 3rd and subsequent digits, when said 1st digit is 1 to 9, express in pairs the time in hours and minutes the execution beginning,
- the 4th digit when the 1st is 0, the 2nd is 2 and the 3rd is from 1 to 9: 0 is off, 1 is on;
- the 5th and subsequent digits express the time at which command execution is to commence.

In one example of the embodiment, the basic data stream comprises eleven bytes, of which the first is a preamble which includes the synchronization, the 2nd to 5th bytes comprise the heading identifying the message source and target, the 6th to 10th bytes form the information itself or message, and the 11th byte is a CRC. The data stream length is preset at 120 ms for example, and is transmitted several times over between 300 ms pauses for instance, until confirmation of receipt from the appliance.

In the other direction of communication, the electric household appliance generates a message in the form of digital data which is modulated in its own FSK modem, and conveyed by the household bus S,N, wherefrom they are demodulated by modem 11 belonging to interface circuit 1 for receipt in digital data by controller 2 via its internal UART Rx. The controller converts them into fixed responses stored in its memories 24 for its target, voice synthesized by recorder/reproducer 4 to the user at a remote location via the telephone line.

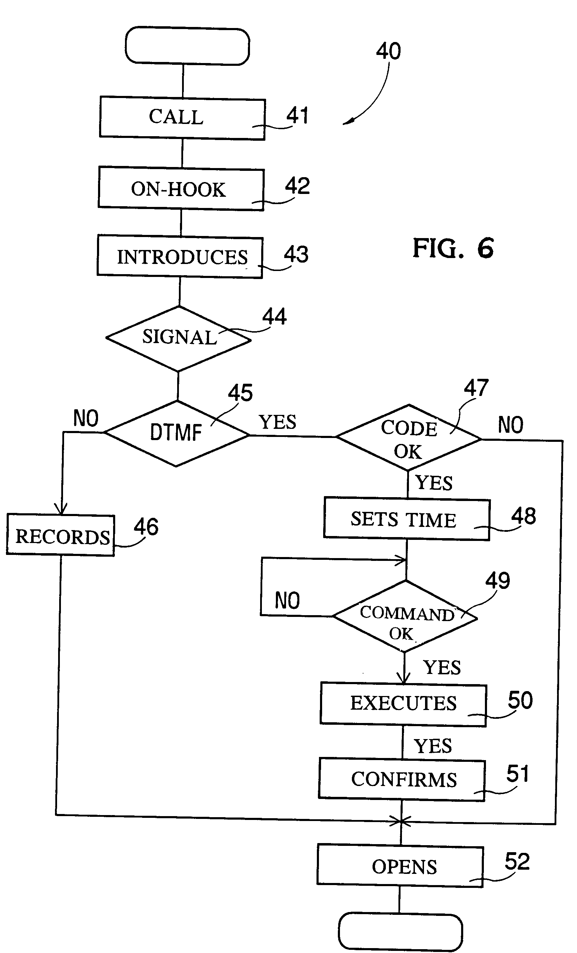

The connection and communication process which interface circuit 1 carries on between the telephone line and the appliance data bus is illustrated by the flow chart in Figure 6, where the numbered blocks represent the following basic stages:
- Ref. 41: the user makes a call to the interface circuit, which detects it and counts a number of times before on-hooking,
- Ref. 42: the interface on-hooks and plays back an introduction of same (Ref. 43), after which, at the end of a preset time, it hangs up if no audio or tone signal is obtained;
- Ref. 44: once a signal is detected, it is transmitted to the recorder (Ref. 46) if it is a voice, or to the detector/generator if it is a tone (Ref. 45);
- Ref. 47: the user inputs a user code via the telephone keypad, up to three times over if not accepted, after which the interface hangs up the telephone,
- Ref. 48: if the correct user code is given, the interface sets a predefined time for a command to be transmitted;
- Ref. 49: once a command has been depressed by the user, the interface will tell him if it is not validly structured, and then hangs up the telephone if no response is received within a preset time;
- Ref. 50: the interface executes the task and issues an audio confirmation response (Ref. 51), and then opens the telephone line (Ref. 52) to complete the process.

## Claims

**1.-** A TELEPHONE INTERFACE CIRCUIT (1) FOR AN APPLIANCE DATA BUS for operating such appliances (APP1,APP2,APPn) locally or from a remote telephone, with means of coupling to the telephone line for detecting the call, and for detecting audio signals and tone signals, a circuit (1) capable of performing the tasks of a telephone answering machine with audio replies and audio message recording using a player/recorder (4) provided with external memories (5), and capable of decoding commands sent by the user from the telephone line by means of an DTMF detector/generator (3), so that they can be processed by an integral controller (2) which relays them to the electric household appliances, where said controller is provided with external memories (23,24) for storing program data and system fixed messages, characterized in that for its application in managing through a common data bus (S, N) a plurality of household appliances which are fitted with integral smart system, it transmits message data and execution and monitoring commands in both directions, and in one direction it records the audio messages, or converts the telephone line dual tones into binary data signals to be distributed via said common data bus (S, N), and in the other direction, converts data from the appliances into audio messages or telephone call signals for the user, for which purpose, on the one side, the signal detector (6), a recorder/reproducer (4), and the DTMF detector/generator (3) are interconnected with and assist controller (2) to distribute, interpret and execute the command in the form of transmitted tones, or the message in the form of a transmitted voice, using therefore the recorder integral memories (5) storing variable user messages, and the controller external memories (23,24) storing permanently fixed data from the interface circuit procedure, and on the other, an FSK modem 11 allows direct communication with each appliance via said common bus.

**2.-** AN INTERFACE CIRCUIT in accordance with Claim 1, wherein the controller (2) used for processing and transmitting two directional data comprises in combination a micro-controller (20) fitted with an internal digital data transceiver, a chip selector (21) which assists discriminating voice and audio signals and distributes them automatically to recorder (4) or to detector (3) respectively, a decoder (22), and a logical circuit (26), both of which assist the chip selector in addressing a range of external program data and permanent set data memories (23, 24) that correspond to preset responses related to the working of the electric household appliances (APPn).

**3.-** AN INTERFACE CIRCUIT in accordance with the preceding Claims, wherein the dual telephone tone detector/generator (3) comprises a transceiver (30) which integrates all detection, conversion, recording, generation and transmission tasks, and a logical circuit (31, 32) interposed on the signals originating from controller (2).

**4.-**AN INTERFACE CIRCUIT in accordance with Claim 1, wherein the FSK modem (11) for direct data transmission between controller (2) and an electric household appliance (APPn) via power line comprises a current carrier transceiver (60), a signal conditioner circuit (62), and a transformer coupling circuit (62).
